# EUROPEAN PATENT SPECIFICATION

(11) **EP 3 543 035 B1**
(45) Date of publication and mention of the grant of the patent: **17.05.2023**
(21) Application number: 16909445.5
(22) Date of filing: 21.07.2016
(51) Int. Cl.: B60B 33/00, B60B 33/04, B60B 19/00

(54) **WHEEL WITH MANUAL BRAKE FOR PIECES OF FURNITURE**
RAD MIT MANUELLER BREMSE FÜR MÖBELSTÜCKE
ROUE POUR MEUBLES À FREIN MANUEL

(43) Date of publication of application: 25.09.2019
(73) Proprietor: Robby Europe Hardware SL, 03778 Beniarbeig Alicante (ES)
(72) Inventor: VINAROZ CONEJERO, Jose, 03700 Denia (Alicante) (ES)
(74) Representative: Pardo Zapata, José
(86) International application number: PCT/ES2016/070555
(87) International publication number: WO 2018/015578

(56) References cited:
- EP-A1- 2 064 073
- EP-A1- 2 853 413
- GB-A- 1 428 451
- GB-A- 1 428 451
- JP-A- 2015 077 907
- US-A1- 2010 306 962
- US-A1- 2011 203 074
- US-B1- 6 360 851
- US-B1- 6 360 851

## Description

### SECTOR OF THE ART

The invention relates to the field of the art comprising accessories for furniture, in concrete within the group of wheels engageable with the legs of chairs or other elements of furniture as tables, shelving, ladder or the like, to facilitate its movement. The invention basically consists of a wheel of those commonly known as hollow or tubular to which two possible brake systems are coupled according to the needs of the element of the furniture to which it is to be coupled, which has the common characteristic of the manual actuation brakes, without the need for the use of drivers or other external elements.

### BACKGROUND OF THE INVENTION

Since a time has been made, several wheel engageable wheels have appeared on the market the invention is characterised in that it is intended for the purpose of the invention to different elements of furniture with the characteristic of being hollow or punched, that is, they maintain the traditional round shape but are laterally viewed as being hollow or hollow, commonly known as tubular. This trend has been collected, among others, in USPAT 6839939 , US PAT 8561258 , CN PAT 100556716 AND INTL 9168689 , US2002178539 US2010306962 CN 200680002040 AND US 9168689 , the older of 2002 and all of the above, it presents the difficulty of achieving that the wheel is braked by lack of internal space for locating traditional brake systems existing in the market. The main function collected in the aforementioned patents is to achieve that the wheel can exhibit all of the rotational and tilting characteristics of the doors standard wheels but with an aesthetic mission which is achieved by lightening the visual load of the wheel at the expense of losing its internal space. Some of them introduce a locking system (brake) very basic, which requires the use of a screwdriver for the external regulation thereof the braking possibilities and the wheel is very difficult, and the wheel is always free.

JP2015077907 *teaches* a *hubless wheel which* is *actuated by rotational movement. The wheel does not comprise any internal toothing.*

*The closest prior document,* US2011203074*, discloses a wheel with manual brake comprising: two lateral* bearings *which are connected by a tubular shaft, an internal casing and* a *device for coupling the wheel, a flat base with a rail with a brake wherein the wheel has* a *hollow O-shaped profile and* a *flat base, the rail and brake are located in the lower part of the wheel.*

*Thus, the invention differs from* US2011203074 *in that :*
- *the lateral bearings have an internal toothing,*
- *the wheel comprises an outer lever for manual* actuation *and*
- *the* brake *moves horizontal.*

*The problem solved by the invention is to provide a hubless* wheel *with an enhanced brake which can be manually actuated.*

The present invention overcomes the current state of the art by incorporating a small sized hollow wheel, and thereby reduce the internal space, with diameters of 65 or 75, or even less, two possible brake systems according to the element of furniture to which they are intended.

For the case of mobile chairs or chairs, a braking system has been devised on its lower part by the mere manual displacement of the external lever which moves the internal locking device of the wheel and makes it impossible to drive the wheel.

If the wheel is to be used for another type of furniture element such as stairs or larger shelves, a part located on the front of the wheel will achieve the locking of the wheel, disabling rolling without the need to dump the furniture in question to actuate the lower lever.

All of the foregoing is achieved without causing the wheel to lose any of its rotational, tilting and rolling characteristics

The basic components of the invention are, starting from Drawing 1 and the different components in the drawing, the following:
The invention relates to a double rolling wheel with intermediate casing between the two bearings provided with a synchronous system and with a hollow or hollow O-profile, a wheel commonly referred to as a tubular.

The side bearings are secured to each other by a rigid tubular part which is joined by the inside at a slightly lower level than the external wheels, in which the centre is fixed to the housing which contains the braking and rotation mechanisms of the wheel.

A recess (12) is provided on the upper inner part of the housing in which a flexor tensioned spring (11) is introduced for the purpose of raising and lowering the housing by pressure.

At the same time at the lower part of the central housing which is designed in a plane, a displacement rail is positioned by which the internal braking piece is circulated.

The braking piece is actuated from the outside by means of an outer lever in a manual mode, without the need for a screwdriver as in the above-mentioned patents or the need for the actuation of any foreign elements

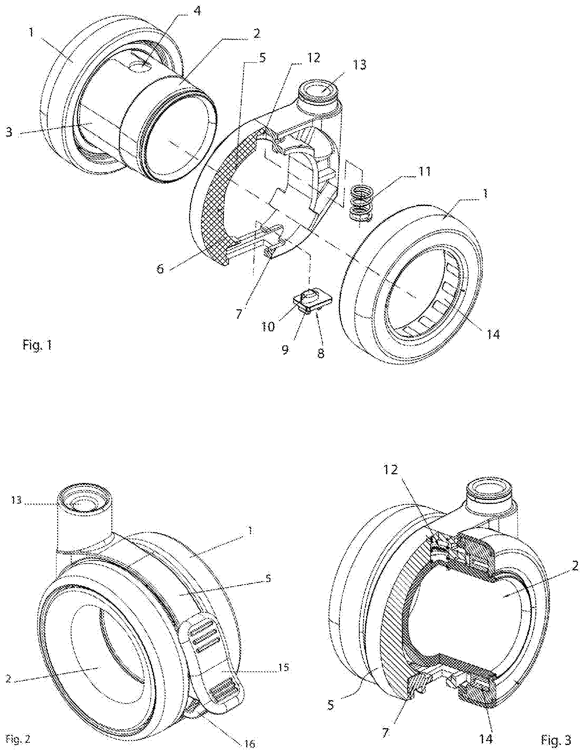

The pressure of the internal spring and the displacement of the brake lever to the locking position enables undesired movements of the wheel. The invention relates to furniture elements which allow external braking, and in order to avoid the need to access the lower part of the wheel, the braking is effected by the front part which is located on the exterior of the wheel as shown in figure 2 .

### EXPLANATION OF THE INVENTION

The invention, which record is intended to consist of a caster of which are located in the office chairs or flaps, or other elements of furniture, of the so-called hollow or tubular members, provided with an internal brake with the possibility of external actuation without the need for external elements to the wheel itself, only with the movement of the parts of the wheel itself by the user's hand.

In order to achieve this, it is part of a hollow or O-shaped profile wheel, also called tubular, and double rolling with an intermediate casing. Said housing has a flat design at the bottom thereof for the purpose of locating in this space a horizontal displacement rail by which a brake mechanism provided with an outer lever which permits its displacement by manual actuation without the need for drivers or foreign elements. The flat base of this intermediate casing does not hinder the rolling since it rests on the hollow joint tube between the two lateral bearings slightly below these without any moment rubbing the floor in the flat part.

At the same time, at the inside of the housing at its upper part, a recess is made in which a flexible spring or damping tensioner is inserted, which completes the locking system. And all of this is achieved without interference in the mechanism for attaching the wheel to the foot or furniture which retains its turning and tilting mechanisms which are left to the right of the housing without interfering with any brake element.

In cases where the wheel does not engage chairs, office chairs or the like, the invention allows for the location of the external braking lever, which causes the fixing of the wheel by pressure, also manual and without the need for the use of drivers or foreign elements to the wheel itself, located in the intermediate housing at the front of the wheel, which drives the braking system as shown in figure 2 .

The present invention is susceptible to industrial application

### BRIEF DESCRIPTION OF THE DRAWINGS

FIG. 1 represents an exploded view of the wheel with the various components enabling the invention.
The drawing 2 represents the exterior of the wheel provided with the front lever (15) of brake actuator (16) with a lower piece of bearing lock.
Drawing 3 represents the internal section of the wheel

### PREFERRED EMBODIMENT OF THE INVENTION

Starting from two lateral bearings (1), to achieve hollow tubular wheel, we have these two bearings together by hollow tube (2) located on the lower part of the bearing. To this tube, pressure coupling recesses of the parts which make up the wheel are made (3) and an upper circular bore (4) between the bearings and with bearing on said central union tube (2) the invention relates to a central part which has called an internal casing (5) to which the two lateral bearings (1) are attached by a hollow tube (2).

Said inner casing (5) is provided with a special flat base (6) design provided with a horizontal displacement rail (7) whereby the brake lever (8) is displaced leaving the exposed outer lever (9) for of the manual actuation. This piece of the brake is displaced on the guide or rail (7) by coupling to the same piece of upper fitting (10) with a simple manual actuated device. Its design, wider at the sides thereof, will block the internal bearings of the two sidewheels by blocking. This manual brake may also be located on the front of the caster by the front lever (15), which blocks the internal toothing (14) equal to the lower part.

In order to achieve the damping system, the housing has a tensioned flexible spring (11) which is located on the top of the housing in the space recessed which mates once assembled with the circular bore (4) of the connecting tube (2). The wheel is attached to the legs of the furniture to which it is coupled by a coupling mechanism (13) located at the end of the housing.

The lateral bearings (1) have an internal toothing (14) which is fixed by the levers (8 or15) when actuated being placed between the bearings of the two side pieces, by displacement of the manual operation brake (16) in the lower part (16) of the front lever (15) or of the brake lever (8) in the inner part by displacement on the inner rail forwardly until it is engaged in the locking position of the bearings

## Claims

1. WHEEL FOR FURNITURE WITH MANUAL BRAKE comprising:
- two lateral bearings (1) with internal toothing (14) which are connected by a tubular shaft (2),
- an internal casing (5) and a device (13) for coupling the wheel,
- a flat base (6) with a rail (7) for a horizontal displacement of the brake lever (8) and
- an outer lever (9) for manual actuation,
**characterized in that**
- the wheel has a hollow O-shaped profile and
- the flat base (6), the brake lever (8) and the outer lever (9) are located in the lower part of the wheel.

2. WHEEL FOR FURNITURE WITH MANUAL BRAKE according to claim 1 **characterized in that** comprises a front lever (15) for a manual operation brake (16) in the lower part.

3. WHEEL FOR FURNITURE WITH MANUAL BRAKE according to claims 1, 2 **characterized in that** comprises means for damping (11).

## Patentansprüche

1. RAD FÜR MÖBEL MIT MANUELLER BREMSE bestehend aus:
- zwei seitlichen Lagern (1) mit Innenverzahnung (14), die über eine Rohrwelle (2) miteinander verbunden sind,
- einem Innenkörper (5) und einer Vorrichtung (13) zum Ankoppeln des Rads,
- einer flachen Basis (6) mit einer Schiene (7) für ein horizontales Verschieben des Bremshebels (8) und
- einem äußeren Hebel (9) für die manuelle Betätigung,
**dadurch gekennzeichnet,**
- **dass** das Rad ein O-förmiges Hohlprofil hat und
- die flache Basis (6), der Bremshebel (8) und der äußere Hebel (9) sich am unteren Teil des Rads befinden.

2. RAD FÜR MÖBEL MIT MANUELLER BREMSE nach Anspruch 1
**dadurch gekennzeichnet, dass** ein vorderer Hebel (15) für eine manuell betätigte Bremse (16) im unteren Teil vorhanden ist.

3. RAD FÜR MÖBEL MIT MANUELLER BREMSE nach Anspruch 1, 2 **dadurch gekennzeichnet, dass** es Dämpfungsmittel (11) aufweist.

## Revendications

1. ROUE POUR MEUBLE AVEC FREIN MANUEL comprenant :
deux roulements latéraux (1) avec denture interne (14) reliés par un arbre tubulaire (2),
un casier interne (5) et un dispositif (13) d'accouplement de la roue, une base plate (6) avec un rail (7) pour un déplacement horizontal du levier de frein (8) et
un levier extérieur (9) pour actionnement manuel,
**caractérisé en ce que**
la roue a un profil creux en forme de 0 et
la base plate (6), le levier de frein (8) et le levier extérieur (9) sont situés dans la partie inférieure de la roue.

2. ROUE POUR MEUBLE AVEC FREIN MANUEL conformément à la revendication 1
**caractérisée en ce qu'**elle comprend un levier avant (15) pour un frein à actionnement manuel (16) dans la partie inférieure.

3. ROUE POUR MEUBLE AVEC FREIN MANUEL conformément à la revendication 1, 2, **caractérisée en ce qu'**elle comprend des moyens d'amortissement (11).
